Europäisches Patentamt

(19) European Patent Office

Office européen des brevets

(11) **EP 0 521 162 B1**

(12) **EUROPEAN PATENT SPECIFICATION**

(45) Date of publication and mention
of the grant of the patent:
**11.09.1996 Bulletin 1996/37**

(21) Application number: **92902882.7**

(22) Date of filing: **20.01.1992**

(51) Int. Cl.$^6$: **B60L 9/18**, B60L 3/10,
B60L 9/22

(86) International application number:
**PCT/JP92/00040**

(87) International publication number:
**WO 92/12873 (06.08.1992 Gazette 1992/21)**

(54) **APPARATUS FOR CONTROLLING ELECTRIC CAR**

VORRICHTUNG ZUR STEUERUNG EINES ELEKTRISCHEN KRAFTWAGENS

APPAREIL POUR COMMANDER UNE VOITURE ELECTRIQUE

(84) Designated Contracting States:
**DE FR**

(30) Priority: **21.01.1991 JP 19170/91**

(43) Date of publication of application:
**07.01.1993 Bulletin 1993/01**

(73) Proprietor: **HITACHI, LTD.**
**Chiyoda-ku, Tokyo 101 (JP)**

(72) Inventor: **OKAMATSU, Shigetoshi**
**Katsuta-shi Ibaraki 312 (JP)**

(74) Representative: **Beetz & Partner**
**Patentanwälte**
**Steinsdorfstrasse 10**
**80538 München (DE)**

(56) References cited:
**EP-A- 0 374 960**          **JP-A-54 051 110**
**JP-A-55 127 806**          **JP-A-59 136 004**

## Description

The present invention relates to an electric car/locomotive controller for use in an electric car/locomotive according to the preamble of claim 1. Such a controller is known from JP-A-55-127806. More particularly, the invention relates to a general controller of an electric car/locomotive for general control of a plurality of units which are formed by combining variable voltage variable frequency inverter and induction motors in one-to-one correspondence.

Recently, as requests for high output of a motor and a maintenance-free motor have become strong, there is a tendency that electric cars/locomotives using, as a motor for powering, an induction motor driven by a variable voltage variable frequency inverter are put into practical use.

In an electric car/locomotive, the improvement of readhesion characteristic is a ceaseless proposition, and to this end, it is necessary to detect the real running speed of an electric car/locomotive. Accordingly, in a conventional control apparatus for example as disclosed in JP-A-55-127806, the rotating speed of a trailer wheel of an electric car/locomotive (a wheel to which no motor for driving the electric car/locomotive is connected) is detected and readhesion control is performed on the basis of the detected rotating speed as a reference representing the real running speed of the electric car/locomotive. Specifically, the output frequency (inverter frequency) of a variable voltage variable frequency inverter is controlled on the basis of the rotating speed of the trailer wheel so as to prevent the inverter frequency from rising or falling uncontrollably even in the case of occurrence of slide, so that the shunt motor characteristic (the characteristic that the generated torque decreases as the rotating speed rises) of the induction motor per se can function effectively to thereby obtain a sufficient improvement in readhesion performance.

In the prior art, a trailer wheel and the means of detecting the rotating speed of the trailer wheel are required for detection of the real running speed of the electric car/locomotive. Accordingly, the prior art has a problem in that not only increase in cost is inevitable but trailer wheels must be provided because an electric car/locomotive having no trailer wheel cannot be used.

An object of the present invention is to provide an electric car/locomotive controller in which the real running speed of the electric car/locomotive can be detected easily and securely without provision of any trailer wheel and any means of detecting the rotating speed thereof; and variable voltage variable frequency inverters can be controlled on the basis of the detected real running speed so as to prevent the inverter frequency from rising or falling uncontrollably to thereby attain a sufficient readhesion performance against the occurrence of slide.

This object is solved in accordance with the features of independent claim 1. Dependent claims are directed on preferred embodiments of the invention.

According to an aspect of the present invention, induction motors for powering the electric car/locomotive are combined with corresponding variable voltage variable frequency inverters in pairs so as to form driving control units, and a torque reduction control means is provided for reducing the instructed torque value of the induction motor of a preset one of the driving control units from the instructed torque value given to every driving control unit by a predetermined rate to thereby control the output frequencies of the variable voltage variable frequency inverters of the remaining driving control units on the basis of the rotating speed frequency obtained by the preset driving control unit in which the torque is reduced by the torque reduction control means.

The control means acts to reduce the torque of the induction motor of a specific driving control unit to be smaller than the torque of the induction motors of the remaining driving control units. As a result, the occurrence of slide in the driving wheel connected to the induction motor of the specific driving control unit is substantially perfectly prevented. Accordingly, the rotating speed frequency obtained from the specific driving control unit can be used as a value sufficiently corresponding to the real running speed of the electric car/locomotive. Accordingly, the real running speed of the electric car/locomotive necessary for controlling readhesion can be detected easily and securely without use of any trailer wheel and without use of any means of detecting the rotating speed thereof.

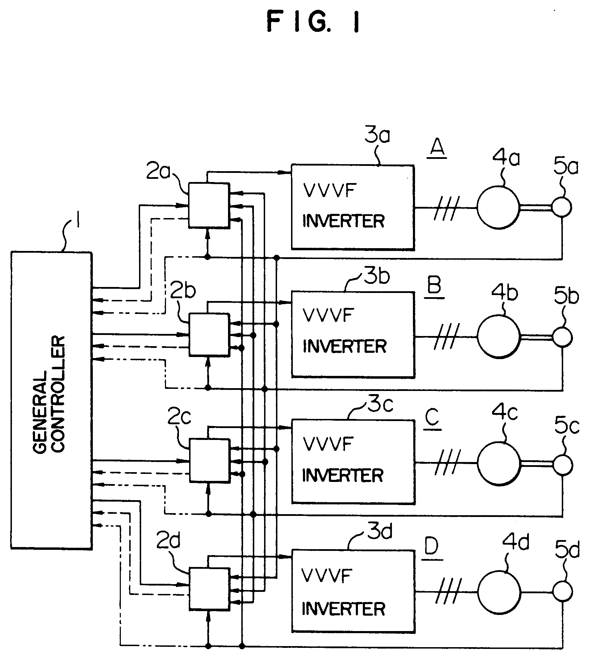

Fig. 1 is a block diagram showing a controller of an electric car/locomotive according to an embodiment of the present invention.

A controller of an electric car/locomotive according to the present invention will be described hereunder with reference to an embodiment illustrated in the drawing.

Fig. 1 shows an embodiment in which the present invention is applied to an electric car/locomotive having four axes of driving wheels, and, therefore, having four driving control units constituted by induction motors for powering and variable voltage variable frequency inveters in pairs. In Fig. 1, the reference characters A, B, C and D represent four driving control units. The reference numeral 1 designates a general controller; 2a, 2b, 2c and 2d designate voltage current controllers respectively; 3a, 3b, 3c and 3d designate variable voltage variable frequency inverters respectively; 4a, 4b, 4c and 4d designate induction motors for powering respectively, connected to the driving wheels; and 5a, 5b, 5c and 5d designate rotating speed detectors respectively. Accordingly, each of the driving control units A to D includes one of the variable voltage variable frequency inverters 3a, 3b, 3c and 3d and one of the induction motors 4a, 4b, 4c and 4d in pairs and further includes one of the voltage current controllers 2a, 2b, 2c and 2d and one of the rotating speed detectors 5a, 5b, 5c and 5d in pairs.

The functions of the respective parts will be described hereunder before description of the function of the general controller 1. The voltage current controllers 2a to 2d control the variable voltage variable frequency inverters 3a to 3d on the basis of the torque instructions given by the general controller 1, to thereby set the output frequencies and voltages thereof to values corresponding to the torque instructions, respectively. The variable voltage variable frequency inverters 3a to 3d convert electric power supplied from the catenary wire into three-phase AC electric power of a predetermined frequency and a predetermined voltage and supply the three-phase AC electric power to the induction motors 4a to 4d to act to move the electric car/locomotive. The rotating speed detectors 5a to 5d are respectively connected to rotary shafts of the induction motors 4a to 4d to act to detect the rotating speed thereof.

More in detail, the output frequency (inverter frequency) from each of the variable voltage variable frequency inverters 3a to 3d is controlled by corresponding voltage current controllers 2a to 2d, to be a frequency obtained by adding a slip frequency determined on the basis of the instructed torque value to the frequency of an output signal from any one of the rotating speed detectors 5a to 5d (at the time of powering of the electric car/locomotive) or by subtracting the slip frequency from the frequency of an output signal from any one of the rotating speed detectors 5a to 5d (at the time of braking of the electric car/locomotive). The output voltage from each of the variable voltage variable frequency inverters is controlled, by the corresponding voltage current controllers, to be substantially proportional to the inverter frequency (constant control of frequency/voltage ratio) unless the output voltage reaches the maximum value limited by the rated voltage of each of the induction motors 4a to 4d.

Further, each of the voltage current controllers 2a to 2d monitors the rate of change of the output frequency (or the voltage representing the frequency) from corresponding one of the rotating speed detectors 5a to 5d in the corresponding driving control unit. When the rate of change of the output frequency (or the voltage) exceeds a reference change rate determined in advance, each of the voltage current controllers 2a to 2d makes a decision that slide has occurred in the driving wheel connected to the induction motor of the driving control unit. As a result, the voltage current controller supplies a slide detection signal to the general controller 1 and then receives the torque instruction from the general controller 1 and further receives a selection signal to select one rotating speed detector (which needs fetching of the output signal) from the rotating speed detectors 5a to 5d as a reference used for control of the inverter frequency.

On the other hand, the general controller 1 calculates the torque instructions by arithmetic operation according to electric car/locomotive accelerating/decelerating instructions or the like supplied by a main controller (not shown) and supplies the torque instructions to the voltage current controllers 2a to 2d of the driving control units A to D. Further, the general controller 1 monitors the slide detection signals supplied from the voltage current controllers 2a to 2d of the driving control units, so that when the frequency of occurrence of slide exceeds a preset threshold value, the general controller 1 controls previously preselected one of the driving control units A to D. When, for example, the driving control unit A is previously selected, the general controller 1 controls the driving control unit A so that the instructed torque value given to the driving control unit A just before this point of time is reduced by a predetermined value.

After the control to reduce the instructed torque value is performed, the general controller 1 further supplies the selection signal to the voltage current controllers 2a to 2d of the respective driving control units to make an instruction to control the inverter frequency by using the signal outputted from the rotating speed detector in the driving control unit now subjected to the reduction of the instructed value, for example, the rotating speed detector 5a in the driving control unit A.

Accordingly, while an electric car/locomotive having a plurality of driving wheels is running, one of the driving wheels can be necessarily subjected to read-hesion control by reducing the torque thereof even in the case where the driving wheel is in the slide state. Accordingly, the signal obtained from the rotating speed detector of the induction motor connected to the driving wheel, for example, the signal obtained from the rotating speed detector 5a of the induction motor 4a, accurately becomes a signal corresponding to the real running speed of the electric car/locomotive at this point of time. Accordingly, in this embodiment, the real running speed of the electric car/locomotive can be always faithfully detected without use of any trailer wheel and without use of any speed detector as connected to such a trailer wheel.

Further, in this embodiment, the inverter frequencies of the remaining driving control units, that is, the driving control units B to D in this case, are controlled on the basis of the running speed signal obtained from the driving wheel securely subjected to readhesion control by reducing the torque thereof by a predetermined value in the aforementioned manner. Accordingly, the inverter frequencies of the variable voltage variable frequency inverters 3b to 3d in these driving control units are securely prevented from rising uncontrollably. As a result, the shunt motor characteristic of the induction motor per se can function effectively, so that excellent readhesion characteristic can be provided.

In this embodiment of the present invention, on the basis of the consideration that it is preferable that the quantity of reduction of the torque is minimized, the driving control unit requiring reduction of the instructed torque value is selected as follows. Although this selection must be modified correspondingly to the structure of the electric car/locomotive, a unit which is so large in axle weight as to attain a relatively good rail level condition to thereby prevent the occurrence of slide, the rearmost driving control unit in the direction of the running of the electric car/locomotive is generally selected.

The quantity of reduction of the instructed torque value for the previously selected driving control units A to D, for example, the quantity of reduction of the instructed torque value for the driving control unit A, will be described hereunder.

On the whole of the electric car/locomotive, the tractive force or braking force is low when the frequency of occurrence of slide is high. Accordingly, it can be considered that partial reduction of torque has no large influence as long as readhesion characteristic can be improved.

Assuming now that the total torque quantity $T\tau$ of the electric car/locomotive is 100% in the case where the electric car/locomotive has four driving control units A to D as described above, then the torque quantity of one driving control unit is 25%. When the torque quantity of one driving control unit is halved, that is, when the torque quantity of some driving control unit is reduced to 12.5%, the total torque quantity $T\tau'$ of the electric car/locomotive is reduced to 87.5% as represented by the following expression.

$$T\tau' = 100 - 12.5 = 87.5\%$$

In the case where the electric car/locomotive has six driving control units, the torque quantity of one driving control unit is about 16.6% and the reduction of the total torque quantity $T\tau'$ obtained in the same manner as described above is smaller as follows.

$$T\tau' = 100 - 8.3 = 91.7\%$$

On the contrary, in the condition that the frequency of occurrence of slide is high, it is known that the torque is reduced by 10% at the least, as shown in Fig. 8 in "HITACHI Review", Vol. 61, No. 5, 1979-5, P. 32. Therefore, according to the present invention, a sufficient improvement of readhesion characteristic can be attained without increase of torque reduction.

Although the above description has been made for the assumption that the torque of one driving control unit is halved, the occurrence of slide can be prevented sufficiently in practical use even in the case where the rate of torque reduction is smaller than the aforementioned rate. Accordingly, in practical use, not only the rate of torque reduction can become smaller but readhesion characteristic can be improved securely.

Although the above description has been made for the case that the torque quantity of one driving control unit is reduced but the torque quantities of the remaining driving control units are not specially controlled and are left as the original torque quantities, the invention can be applied as an embodiment thereof to the case that the torque quantities of the residual driving control units may be controlled so as to be increased correspondingly to the reduction of the torque quantity of one driving control unit to keep the total torque quantity of the electric car/locomotive constant, that is, to keep the total tractive force of the electric car/locomotive constant. This is because the inverter frequency can be prevented from rising uncontrollably to thereby attain a sufficient improvement of readhesion characteristic on the basis of the shunt motor characteristic of the induction motor.

Accordingly, in this embodiment, not only the real running speed of the electric car/locomotive can be securely detected substantially without lowering of performance of the electric car/locomotive, but readhesion characteristic can be improved sufficiently.

In a real electric car/locomotive, one specific driving wheel of all driving wheels, such as the driving wheel located in the head in the direction of running of the electric car/locomotive, has a tendency that slide occurs particularly frequently. The occurrence of slide can be predicted to some degree.

In such a case, the instructed torque value given to the driving control unit corresponding to the driving wheel located in the head may be initially reduced by the aforementioned predetermined value in advance regardless of the detection of occurrence of slide, or in addition to that, the instructed torque values of the other driving control units may be increased by a value corresponding to the reduction of the torque quantity.

In the embodiment of the present invention using such a measure, the general controller can be simplified in structure to attain reduction in cost.

As described above, the real running speed of the electric car/locomotive can be securely detected without provision of any trailer wheel and any rotating speed detector connected to the trailer wheel. Accordingly, the number of parts can be reduced. Further, the inverters of the driving control units can be controlled on the basis of the thus detected real running speed, so that the inverter frequency can be prevented from raising or falling uncontrollably. Accordingly, the shunt motor characteristic of the induction motor can function effectively to thereby obtain excellent readhesion characteristic easily.

## Claims

1. An electric car/locomotive controller for use in an electric car/locomotive of the system in which there are provided at least two induction motors (4a-d) for powering said electric car/locomotive and in which said induction motors are combined with variable voltage variable frequency inverters (3a-3d) in one-to-one correspondence so as to form a plurality of driving control units (A, B, C, D) to thereby generally control the respective variable voltage variable frequency inverters of said driving control units, **characterized in that**

the electric car/locomotive controller comprises a torque reduction control means (1, 2a-d) for reducing the instructed torque value of one of the induction motors belonging to a preselected one of said driving control units by a predetermined value, wherein the output frequencies of the variable voltage variable frequency inverters of the remaining driving control units are controlled on the basis of the rotating speed frequency obtained by said preselected driving control unit.

2. A controller according to claim 1,
characterized in further comprising
a detection means (5a-d) for detecting the occurrence of slip or slide in a driving wheel, wherein said torque reduction control means fulfills its torque reduction control function when occurrence of slip or slide is detected by said detection means.

3. A controller according to claim 1 or 2,
characterized in further comprising
a torque increase control means for increasing the instructed torque values of the induction motors of the driving control units other than said preselected driving control unit by a predetermined value, wherein the torque increase control function of said torque increase control means acts simultaneously when the torque reduction control function of said torque reduction control means acts.

4. A controller according to claim 2,
characterized in that
the detection means judges occurrence of slip or slide in a driving wheel on the basis of the fact that the rate of change of the rotating speed frequency of the induction motor in each of the driving control units exceeds a reference value being set in advance.

5. An electric car/locomotive controller according to claim 3,
characterized in that
the quantity of increase of torque obtained by said torque increase control means serves as a torque quantity necessary for cancelling the quantity of reduction of torque obtained by said torque reduction control means.

**Patentansprüche**

1. Steuerung für ein elektrisches Fahrzeug oder eine elektrische Lokomotive zur Verwendung in einem elektrischen Fahrzeug oder einer elektrischen Lokomotive mit einem System, in dem zumindest zwei Asynchronmotoren (4a-d) zum Antreiben des elektrischen Fahrzeugs bzw. der elektrischen Lokomotive vorgesehen sind, und in dem die Asynchronmotoren mit Wechselrichtern (3a-3d) variabler Spannung und variabler Frequenz paarweise kombiniert sind, so daß sich mehrere Antriebssteuerungseinheiten (A, B, C, D) ergeben, womit allgemein die Wechselrichter variabler Spannung und variabler Frequenz der Antriebssteuerungseinheiten angesteuert werden,
dadurch **gekennzeichnet**, daß
die Steuerung des elektrischen Fahrzeugs bzw. der elektrischen Lokomotive eine Drehmomentverringerungs-Steuerungseinrichtung (1, 2a-d) aufweist zur Verringerung des Drehmoment-Sollwerts eines der Asynchronmotoren, der zu einer vorab ausgewählten Antriebssteuerungseinheit gehört, um einen bestimmten Wert, wobei die Ausgangsfrequenzen der Wechselrichter variabler Spannung und variabler Frequenz der übrigen Antriebssteuerungseinheiten auf der Grundlage der Drehzahl, die sich bei der vorab ausgewählten Antriebssteuerungseinheit ergibt, gesteuert werden.

2. Steuerung nach Anspruch 1,
weiter gekennzeichnet durch
eine Erfassungseinrichtung (5a-d) zur Erfassung des Auftretens von Schlupf oder Rutsch eines Antriebsrads, wobei die Drehmomentverringerungs-Steuerungseinheit die Funktion der Drehmomentverringerungssteuerung dann ausführt, wenn durch die Erfassungseinrichtung Schlupf oder Rutsch erfaßt wird.

3. Steuerung nach Anspruch 1 oder 2,
weiter gekennzeichnet durch
eine Drehmomentzunahme-Steuerungseinrichtung zum Erhöhen des Drehmoment-Sollwerts der Asynchronmotoren der Antriebssteuerungseinheiten, die nicht die vorab ausgewählte Antriebssteuerungseinheit sind, um einen vorbestimmten Wert, wobei die Funktion der Drehmomentzunahmesteuerung der Drehmomentzunahme-Steuerungseinrichtung gleichzeitig mit der Funktion der Drehmomentverringerung der Drehmomentverringerungs-Steuerungseinrichtung ausgeführt wird.

4. Steuerung nach Anspruch 2,
dadurch gekennzeichnet, daß
die Erfassungseinrichtung das Auftreten von Schlupf oder Rutsch in einem Antriebsrad auf der Grundlage der Tatsache beurteilt, daß die Änderungsgeschwindigkeit der Drehzahl des Asynchronmotors in einer Antriebssteuerungseinheit einen vorab gesetzten Bezugswert überschreitet.

5. Steuerung für ein elektrisches Fahrzeug bzw. eine elektrische Lokomotive nach Anspruch 3,
dadurch gekennzeichnet, daß
das Maß der Drehmomentzunahme, das sich aufgrund der Drehmomentzunahme-Steuerungseinrichtung ergibt, als Drehmomentgröße dient, die zum Aufheben des Maßes der Drehmomentverringerung dient, das sich wegen der Drehmomentverringerungs-Steuerungseinrichtung ergibt.

**Revendications**

1. Dispositif de commande de voiture/locomotive électrique destiné à être utilisé, dans une voiture/locomotive électrique, à système dans lequel au moins
   deux moteurs asynchrones (4a-d) sont prévus pour
   alimenter en énergie ladite voiture/locomotive électrique et dans lequel lesdits moteurs asynchrones
   sont combinés individuellement avec des onduleurs (3a-3d) à tension variable et fréquence variable, afin de former une pluralité d'unités (A, B, C, D)
   de commande d'entraînement pour commander de
   ce fait d'une manière globale les onduleurs respectifs à tension variable et fréquence variable desdites unités de commande d'entraînement,
   **caractérisé en ce que**
   le dispositif de commande de voiture/locomotive
   électrique comporte un moyen (1, 2a-d) de commande de réduction de couple pour réduire dans
   une mesure prédéterminée la valeur de couple
   demandée d'un des moteurs asynchrones appartenant à une unité préalablement sélectionnée parmi
   lesdites unités de commande d'entraînement, les
   fréquences de sortie des onduleurs à tension variable et fréquence variable des autres unités de commande d'entraînement étant commandées en
   fonction de la fréquence de vitesse de rotation
   obtenue par ladite unité de commande d'entraînement préalablement sélectionnée.

2. Dispositif de commande selon la revendication 1,
   caractérisé en ce qu'il comporte en outre
   un moyen de détection (5a-d) pour détecter
   l'apparition d'un patinage ou d'un glissement d'une
   roue motrice, ledit moyen de commande de réduction de couple remplissant sa fonction de commande de réduction de couple lorsque l'apparition
   d'un patinage ou d'un glissement est détectée par
   ledit moyen de détection.

3. Dispositif de commande selon la revendication 1 ou
   2,
   caractérisé en ce qu'il comporte en outre
   un moyen de commande d'augmentation de
   couple pour accroître dans une mesure prédéterminée les valeurs de couples demandées des
   moteurs asynchrones des unités de commande
   d'entraînement autres que ladite unité de com-
   mande d'entraînement préalablement sélection-
   née, la fonction de commande d'augmentation de
   couple dudit moyen de commande d'augmentation
   de couple s'exerçant en même temps que la fonction de commande de réduction de couple dudit
   moyen de commande de réduction de couple.

4. Dispositif de commande selon la revendication 2,
   caractérisé en ce que
   le moyen de détection juge l'apparition d'un
   patinage ou d'un glissement d'une roue motrice sur
   la base du fait que le rythme de changement de la
   fréquence de vitesse de rotation du moteur asynchrone dans chacune des unités de commande
   d'entraînement dépasse une valeur de référence
   établie à l'avance.

5. Dispositif de commande de voiture/locomotive électrique selon la revendication 3,
   caractérisé en ce que
   l'ampleur d'augmentation de couple obtenue
   par ledit moyen de commande d'augmentation de
   couple sert de valeur de couple nécessaire pour
   annuler la valeur de réduction de couple obtenue
   par ledit moyen de commande de réduction de cou-
   ple.

# F I G. 1